(19) Europäisches Patentamt / European Patent Office / Office européen des brevets

(11) **EP 4 503 245 A1**

(12) **EUROPEAN PATENT APPLICATION**
published in accordance with Art. 153(4) EPC

(43) Date of publication:
05.02.2025 Bulletin 2025/06

(21) Application number: 23780880.3

(22) Date of filing: 30.03.2023

(51) International Patent Classification (IPC):
$H01M\ 10/0587^{(2010.01)}$    $H01M\ 4/134^{(2010.01)}$
$H01M\ 4/66^{(2006.01)}$    $H01M\ 10/052^{(2010.01)}$
$H01M\ 50/449^{(2021.01)}$    $H01M\ 50/46^{(2021.01)}$
$H01M\ 50/463^{(2021.01)}$

(52) Cooperative Patent Classification (CPC):
H01M 4/134; H01M 4/66; H01M 10/052;
H01M 10/0587; H01M 50/449; H01M 50/46;
H01M 50/463; Y02E 60/10; Y02P 70/50

(86) International application number:
PCT/JP2023/013185

(87) International publication number:
WO 2023/190872 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.03.2022 JP 2022060689

(71) Applicant: Panasonic Intellectual Property
Management Co., Ltd.
Kadoma-shi, Osaka 571-0057 (JP)

(72) Inventor: UCHIYAMA Yohei
Kadoma-shi, Osaka 571-0057 (JP)

(74) Representative: Novagraaf International SA
Chemin de l'Echo 3
1213 Onex, Geneva (CH)

(54) **LITHIUM SECONDARY BATTERY**

(57) A lithium secondary battery includes a columnar wound electrode group having a hollow part and a non-aqueous electrolyte having lithium ion conductivity. The electrode group includes a positive electrode, a negative electrode including a negative electrode current collector, and a separator disposed between the positive electrode and the negative electrode. Lithium metal is deposited on the negative electrode when the battery is charged, and the lithium metal dissolves when the battery is discharged. The negative electrode current collector is an austenitic stainless steel foil or an oxygen-free copper foil. When D represents a length in a radial direction from an inner circumferential surface to an outer circumferential surface of the electrode group in a cross section perpendicular to a winding axis of the electrode group in a discharged state, the electrode group in the discharged state includes a first region that is within a distance of $(1/4) \times D$ from the inner circumferential surface of the electrode group and a second region that is within a distance of $(1/4) \times D$ from the outer circumferential surface of the electrode group. In the electrode group in the discharged state, an inter-electrode distance X1 between the positive electrode and the negative electrode in the first region and an inter-electrode distance X2 between the positive electrode and the negative electrode in the second region have a relationship: $2 \leq X1/X2$.

EP 4 503 245 A1

FIG. 1

## Description

[Technical Field]

The present disclosure relates to a lithium secondary battery.

[Background Art]

A lithium secondary battery (lithium metal secondary battery) includes a columnar wound electrode group having a hollow part and a non-aqueous electrolyte. The wound electrode group is obtained by spirally winding a positive electrode and a negative electrode including a negative electrode current collector with a separator disposed between the positive electrode and the negative electrode. In the lithium secondary battery, lithium metal is deposited on the negative electrode when the battery is charged, and the lithium metal dissolves and is released as lithium ions into the non-aqueous electrolyte when the battery is discharged.

Incidentally, PTL 1 proposes forming a reinforced part by superposing a reinforcing separator on a portion of a separator body to prevent a short circuit in a nickel hydrogen battery including a spiral electrode group.

[Citation List]

[Patent Literature]

PTL 1: Japanese Laid-Open Patent Publication No. 2014-216261

[Summary of Invention]

[Technical Problem]

There is demand for lithium secondary batteries having improved cycle characteristics.

[Solution to Problem]

An aspect of the present disclosure relates to a lithium secondary battery including: a columnar wound electrode group having a hollow part; and a non-aqueous electrolyte having lithium ion conductivity, wherein the electrode group includes a positive electrode, a negative electrode including a negative electrode current collector, and a separator disposed between the positive electrode and the negative electrode, lithium metal is deposited on the negative electrode when the battery is charged, and the lithium metal dissolves when the battery is discharged, the negative electrode current collector is an austenitic stainless steel foil or an oxygen-free copper foil, and when D represents a length in a radial direction from an inner circumferential surface to an outer circumferential surface of the electrode group in a cross section perpendicular to a winding axis of the electrode group in a discharged state, the electrode group in the discharged state includes a first region that is within a distance of $(1/4) \times D$ from the inner circumferential surface of the electrode group and a second region that is within a distance of $(1/4) \times D$ from the outer circumferential surface of the electrode group, and in the electrode group in the discharged state, an inter-electrode distance X1 between the positive electrode and the negative electrode in the first region and an inter-electrode distance X2 between the positive electrode and the negative electrode in the second region have a relationship: $2 \leq X1/X2$.

[Advantageous Effects of Invention]

According to the present disclosure, it is possible to improve the cycle characteristics of a lithium secondary battery.

While novel features of the present invention are set forth in the appended claims, both the configuration and content of the present invention, as well as other objects and features of the present invention, will be better understood from the following detailed description given with reference to the drawings.

[Brief Description of Drawings]

FIG. 1 is a schematic longitudinal cross-sectional view of a lithium secondary battery according to an embodiment of the present disclosure.

FIG. 2 is a schematic diagram showing a cross section of a battery perpendicular to an axis of the battery.

FIG. 3 is a schematic diagram showing an example of a configuration of a first region of an electrode group.

FIG. 4 is a schematic diagram showing another example of the configuration of the first region of the electrode group.

FIG. 5(a) is a top view showing an example of a first substrate and a negative electrode placed on the first substrate.

FIG. 5(b) is a top view showing an example of a negative electrode composite body.

FIG. 6(a) is a top view showing an example of a second substrate and a positive electrode placed on the second substrate. FIG. 6(b) is a top view showing an example of a positive electrode composite body.

FIG. 7 is a top view showing an example of a positive electrode including protrusions.

[Description of Embodiments]

The following describes example embodiments of the present disclosure, but the present disclosure is not limited to the following examples. In the following description, specific numerical values and materials may be described as examples, but other numerical values and materials may also be applied as long as effects of the present disclosure can be obtained. In the present specification, the expression "a numerical value A to a numerical value B" includes the numerical value A and the numerical value B, and can be read as "the numerical value A or more and the numerical value B or less". In the following description, if lower and upper limits of numerical values regarding specific physical properties or conditions are exemplified, any of the exemplified lower limits and any of the exemplified upper limits can be combined as desired as long as the lower limit is not equal to or greater than the upper limit. When a plurality of materials are described as examples, a material selected from the materials may be used alone, or two or more of the materials may be used in combination.

A lithium secondary battery according to an embodiment of the present disclosure includes a columnar wound electrode group having a hollow part and a non-aqueous electrolyte having lithium ion conductivity. The electrode group includes a positive electrode, a negative electrode including a negative electrode current collector, and a separator disposed between the positive electrode and the negative electrode. Lithium metal is deposited on the negative electrode when the battery is charged, and the lithium metal dissolves when the battery is discharged. The negative electrode current collector is an austenitic stainless steel foil or an oxygen-free copper foil. D represents a length in a radial direction from an inner circumferential surface to an outer circumferential surface of the electrode group in a cross section perpendicular to a winding axis of the electrode group in a discharged state (when the battery is discharged). The electrode group in the discharged state includes a first region that is within a distance of $(1/4) \times D$ from the inner circumferential surface of the electrode group and a second region that is within a distance of $(1/4) \times D$ from the outer circumferential surface of the electrode group. In the electrode group in the discharged state, an inter-electrode distance $X1$ between the positive electrode and the negative electrode in the first region and an inter-electrode distance $X2$ between the positive electrode and the negative electrode in the second region have a relationship: $2 \leq X1/X2$.

Usually, the electrode group is constantly in contact with an inner circumferential surface of a battery can from when the battery is charged to when the battery is discharged, and accordingly, the second region can also be said to be a region that is within a distance of $(1/4) \times D$ from the inner circumferential surface of the battery can. Also, the winding axis of the electrode group substantially coincides with an axis of the cylindrical battery can, and accordingly, the radial direction in the cross section perpendicular to the winding axis of the electrode group can also be said to be a radial direction in a cross section perpendicular to the axis of the battery can.

The inter-electrode distance is a distance between the positive electrode and the negative electrode facing the positive electrode. The inter-electrode distance is substantially the same as the thickness of the separator between the positive electrode and the negative electrode in the discharged state. When the separator includes a plurality of substrates (or a substrate and protrusions), the thickness of the separator is a total thickness of the plurality of substrates (or the substrate and the protrusions). Note that the expression "discharged state" refers to a state where the SOC is $0.1 \times C$ or less.

The lithium secondary battery according to the present disclosure is also called a lithium metal secondary battery. Lithium metal is deposited on the negative electrode of this type of battery when the battery is charged, and the lithium metal dissolves when the battery is discharged. Specifically, the negative electrode includes at least the negative electrode current collector, and the lithium metal is deposited on the negative electrode current collector.

In the lithium secondary battery, for example, 70% or more of the rated capacity is realized by deposition and dissolution of lithium metal. Movement of electrons at the negative electrode during charging and discharging occurs mainly due to deposition of lithium metal on the negative electrode and dissolution of lithium metal from the negative electrode. Specifically, 70% to 100% (e.g., 80% to 100% or 90% to 100%) of the movement of electrons (from another standpoint, a current) at the negative electrode during charging and discharging occurs due to deposition and dissolution of lithium metal. That is to say, the negative electrode according to the present disclosure differs from a negative electrode at which movement of electrons during charging and discharging occurs mainly due to lithium ions being absorbed and released by a negative electrode active material (e.g., graphite).

In a battery in which lithium metal is deposited on the negative electrode when the battery is charged, the open circuit potential (OCV: Open Circuit Voltage) of the negative electrode in a fully-charged state is 70 mV or less with respect to lithium metal (lithium dissolution/deposition potential), for example. The fully-charged state is a state where the battery has been charged such that the SOC (State of Charge) is $0.98 \times C$ or more, where C represents the rated capacity of the battery, for example. The open circuit potential (OCV) of the negative electrode in the fully-charged state can be measured by disassembling the fully-charged battery in an argon atmosphere, taking out the negative electrode, and assembling a cell using lithium metal as a counter electrode. A non-aqueous electrolyte used in the cell may have the same composition as the non-aqueous electrolyte included in the disassembled battery.

When the austenitic stainless steel foil or the oxygen-free copper foil is used as the negative electrode current collector, embrittlement of the negative electrode current collector (e.g., an electrodeposited copper foil or a ferritic stainless steel foil) during charging and discharging and resulting breakage of the negative electrode are suppressed. On the other hand, lithium metal is deposited on the negative electrode when the battery is charged, and accordingly, the amount of expansion of the negative electrode is large. Also, the outer circumferential surface of the electrode group and the inner circumferential surface of the battery can housing the electrode group are usually constantly in contact with each other from when the battery is charged to when the battery is discharged. A winding end portion of the electrode group is fixed with a piece of tape. Accordingly, as the negative electrode expands, stress is applied from the battery can to the electrode group from the outer circumferential surface side to the inner circumferential surface side, and the stress tends to be concentrated in the vicinity of the hollow part (inner circumferential surface side) of the electrode group. Therefore, buckling (including bending) of the electrodes, breakage of the positive electrode, and the like occur in the vicinity of the hollow part of the electrode group. Consequently, an internal short circuit occurs, for example, and a capacity retention rate during cycles significantly decreases. Particularly, when the lithium metal is deposited in such a manner as to form dendrites, the amount of expansion of the negative electrode becomes larger, and buckling of the electrodes and the like tend to occur. When breakage of the negative electrode due to embrittlement of the negative electrode current collector is suppressed, the stress is not released as a result of the breakage, and accordingly, the concentration of the stress in the vicinity of the hollow part (inner circumferential surface side) of the electrode group along with the expansion of the negative electrode is noticeable.

However, in the lithium secondary battery according to the present disclosure, the austenitic stainless steel foil or the oxygen-free copper foil is used as the negative electrode current collector, and the inter-electrode distance in the first region from which the electrode group is wound is made large by setting X1/X2 to 2 or more. Breakage of the negative electrode due to embrittlement of the negative electrode current collector is suppressed, and the inter-electrode distance in the first region is made large by setting X1/X2 to 2 or more, and therefore, the separator is likely to be effectively compressed (voids inside the separator become smaller in size), and the concentration of the stress in the vicinity of the hollow part (inner circumferential surface side) of the electrode group along with the expansion of the negative electrode is effectively mitigated, and buckling of the electrodes and the like are suppressed. The cycle characteristics are significantly improved owing to the effect of suppressing embrittlement of the negative electrode current collector and the effect of mitigating the concentration of stress.

In the second region, breakage of the negative electrode due to embrittlement of the negative electrode current collector is suppressed, and the above-described concentration of stress is unlikely to occur. Accordingly, the inter-electrode distance in the second region can be made smaller than the inter-electrode distance in the first region to increase an energy density. Moreover, since the inter-electrode distance is small, a surface pressure is likely to be applied from the separator to the negative electrode and the generation of dendrites can be suppressed.

If an electrodeposited copper foil is used as the negative electrode current collector, even if the inter-electrode distance in the first region, from which the electrode group is wound, is made large by setting X1/X2 to 2 or more, the negative electrode brakes due to embrittlement of the negative electrode current collector (in particular, the breakage tends to occur in an outer circumferential portion of the second region), and the cycle characteristics deteriorate. If X1/X2 is less than 2, the effect of mitigating the above-described concentration of stress is insufficient, buckling of the electrodes and the like occur, and the cycle characteristics deteriorate.

From the standpoint of improving cycle characteristics and achieving a high energy density, X1/X2 may be 2 or more and 10 or less, 2 or more and 8 or less, or 4 or more and 8 or less.

The inter-electrode distance X1 in the first region and the inter-electrode distance X2 in the second region can be determined as follows.

An X-ray CT image of a cross section of the battery in an initial discharged state (e.g., when the battery is discharged for the first time after the battery is purchased or when the battery is discharged after being subjected to a few charge-discharge cycles after the production) perpendicular to the winding axis of the electrode group inside the battery is obtained. Note that the expression "when the battery is discharged" refers to a state where the SOC is $0.1 \times C$ or less. The length D in the radial direction from the inner circumferential surface to the outer circumferential surface in the cross section of the electrode group is measured with use of the image to determine the first region and the second region. The electrodes and the separator are distinguished by performing binarization processing or the like. The inter-electrode distance is measured at 5 to 20 points selected at equal intervals along the separator in the first region, and X1 is determined by calculating the average of the measured values. X2 in the second region is determined in the same manner.

It is also possible to calculate the inter-electrode distance X1 in the first region based on thicknesses of the positive electrode and the negative electrode measured by disassembling the battery in the initial discharged state, the length D and the first region determined using the above-described X-ray CT image, and the number of stages (the number of turns of the positive electrode and the negative electrode) in the first region. The inter-electrode distance X2 in the second region may also be calculated in the same manner.

The electrode group includes a third region between the first region and the second region. The third region may include a region in which the inter-electrode distance is X1 on the first region side and a region in which the inter-electrode distance is X2 on the second region side. For example, the inter-electrode distance may be X1 in a region that includes the first region and the first-region-side portion of the third region (e.g., a region that is within a distance of $(1/2)\times D$ or $(2/5)\times D$ from the inner circumferential surface of the electrode group). The inter-electrode distance may be X1 or X2 in the entire third region. A ratio between a region where the inter-electrode distance is X1 and a region where the inter-electrode distance is X2 in the third region can be determined as appropriate according to the energy density and a distribution of the magnitude of stress generated in the electrode group.

Each of the positive electrode, the negative electrode, and the separator has an elongated sheet shape, for example. The electrode group having the hollow part is obtained by spirally winding the positive electrode and the negative electrode around a predetermined winding core with the separator disposed between the positive electrode and the negative electrode, and removing the winding core, for example. Since the electrode group has the hollow part, the non-aqueous electrolyte can be stored in the hollow part, and the ability of the electrode group to retain the non-aqueous electrolyte can be increased. The non-aqueous electrolyte is kept from being pushing out from the electrode group when the battery is repeatedly charged and discharged (the electrodes repeatedly expand and contract).

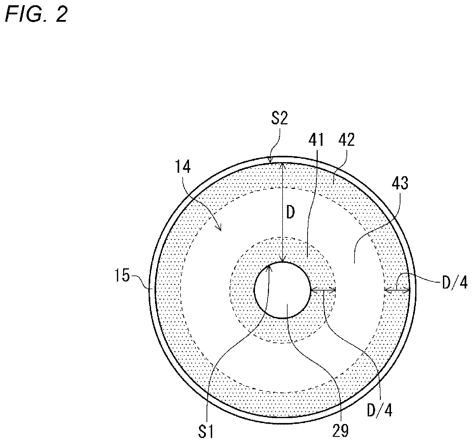

Here, FIG. 2 is a schematic diagram showing a cross section of the battery perpendicular to an axis of the battery. FIG. 2 schematically shows a cross section of the electrode group 14 housed in a battery can 15 taken along a plane perpendicular to the winding axis of the electrode group.

The columnar wound electrode group 14 is obtained by spirally winding the positive electrode and the negative electrode including the negative electrode current collector with the separator disposed between the positive electrode and the negative electrode. The electrode group 14 is housed in the cylindrical battery can 15 having a bottom. The electrode group 14 has a hollow part 29.

D represents a length in a radial direction from an inner circumferential surface S1 to an outer circumferential surface S2 of the electrode group 14 in the cross section perpendicular to the winding axis of the electrode group 14 in the discharged state. The electrode group 14 in the discharged state includes a first region 41 that is within a distance of $(1/4)\times D$ from the inner circumferential surface S1 of the electrode group 14 and a second region 42 that is within a distance of $(1/4)\times D$ from the outer circumferential surface S2 of the electrode group 14 (inner circumferential surface of the battery can 15). In the electrode group 14 in the discharged state, the inter-electrode distance X1 in the first region 41 and the inter-electrode distance X2 in the second region 42 have a relationship: $2 \leq X1/X2$. The electrode group 14 includes a third region 43 between the first region 41 and the second region 42. The inter-electrode distance in the third region 43 may be X1 or X2.

(Negative Electrode Current Collector)

The negative electrode current collector is an austenitic stainless steel foil or an oxygen-free copper foil. When the austenitic stainless steel foil is used, embrittlement of the negative electrode current collector is suppressed, and the negative electrode current collector has appropriate strength and flexibility and excellent resistance to stress generated in the negative electrode. Embrittlement of the negative electrode current collector is also suppressed when a copper foil having a small oxygen content is used. The thickness of the negative electrode current collector is not particularly limited, and is 5 $\mu$m or more and 300 $\mu$m or less, for example.

The austenitic stainless steel is stainless steel having an austenite percentage of 50% or more. The austenite percentage may be 70% or more, 90% or more, or 100%.

The austenite percentage indicates the proportion (mass ratio) of an austenite phase in the stainless steel. When amounts of the austenite phase, a ferrite phase, and a martensite phase contained in the stainless steel are represented by x, y, and z, respectively, the austenite percentage is calculated using the following formula: $\{x/(x+y+z)\}\times 100$. The austenite structure is a facecentered cubic structure (FCC structure), and the ferrite structure and the martensite structure are body-centered cubic structures (BCC structures).

The austenitic stainless steel may contain C, Si, Mn, P, S, Ni, Cr, Mn, Mo, Cu, N, etc., as components other than Fe, for example. The stainless steel may be low carbon stainless steel, extremely low carbon stainless steel, nitrogen-added stainless steel, or two-phase stainless steel containing austenite.

Examples of the austenitic stainless steel include SUS301, SUS302, SUS303, SUS304, SUS305, SUS309, SUS310, SUS312, SUS315, SUS316L, SUS317, SUS321, and SUS347, etc. Among these, SUS304 and SUS316L are particularly preferable. The austenitic stainless steel is not limited to those listed above, and may also be stainless steel that is produced suitably using a melting method and has an austenite percentage of 50% or more. Also, the austenitic stainless steel foil may be a foil that is softened through annealing.

The austenite percentage can be determined using the following method.

A sample (e.g., size: 25 mm×25 mm) of the stainless steel foil is prepared, and X-ray diffraction (XRD) measurement is performed on the sample using a two-dimensional detection function to obtain an XRD pattern (vertical axis: X-ray diffraction intensity, horizontal axis: diffraction angle $2\theta$). The measurement region (micro region) has a size of 15 mm×15 mm, for example.

The following shows desirable XRD measurement conditions.

<Analyzer>

Two-dimensional micro X-ray diffraction analyzer (RINT-RAPID II manufactured by Rigaku Corporation)

<Analysis conditions>

Tube: Co
Monochromatization: use monochrometer (CoK$\alpha$)
Tube output: 40 kV-30 mA
Detector: imaging plate (two-dimensional)
(Reflection method)
Collimator: $\Phi$300 $\mu$m
$\omega$ angle: 25° to 35° (2°/sec)
$\Phi$ angle: 360° rotation (1°/sec)
Measurement time (exposure): 30 minutes

Fitting is performed on the obtained XRD pattern using the least squares method and a standard database, and then quantitative analysis is performed by performing Rietveld analysis. The XRD pattern may include a diffraction peak corresponding to at least one phase of the austenite phase, the ferrite phase, and the martensite phase. The analysis can be performed using software included in the analyzer. Through the analysis, the proportion (mass ratio) of the austenite phase to the sum of the austenite phase, the ferrite phase, and the martensite phase is determined as the austenite percentage. The austenite percentage is determined for each of several measurement regions selected in the sample, and an average value is calculated.

Alternatively, the austenite percentage can be estimated based on the Schaeffler diagram showing a relationship between ferrite stabilizer elements and austenite stabilizer elements and structures. The diagram indicates a structure ratio with two axes indicating the ferrite stabilizer elements and the austenite stabilizer elements. In the diagram, the vertical axis shows Ni equivalent and the horizontal axis shows Cr equivalent. The Cr equivalent is a value obtained by converting a degree of ferrite stabilizer elements to an amount of chromium and can be expressed as: Cr equivalent=%Cr+%Mo+1.5×%Si+0.5×%Nb. The Ni equivalent is a value obtained by converting a degree of austenite stabilizer elements to an amount of nickel and can be expressed as: Ni equivalent=%Ni+30×%C+0.5×%Mn.

Components of stainless steel can be analyzed in accordance with JIS G 0321 to perform quantitative analysis of the austenite stabilizer elements (Ni, Mn, C, etc.) and the ferrite stabilizer elements (Cr, Mo, Si, Nb).

The oxygen-free copper foil is a copper foil having an oxygen content of 50 ppm or less. The oxygen content may be 30 ppm or less, or 15 ppm or less. Note that the oxygen content is the amount of oxygen contained in the base material excluding an oxide film covering the surface of the copper foil.

The oxygen-free copper foil may also contain a trace amount of components other than copper (e.g., Ni, Cr, Fe, Zn, Sn, Ag, Pb, Bi, Cd, Hg, O, P, S, Se, Te, H, etc.). The Cu content in the copper foil may be 99.9% by mass or more, or 99.96% by mass or more. The copper foil may be a rolled copper foil. Examples of the oxygen-free copper include an alloy No. C1020 specified in JIS H 3100.

The oxygen content in the copper foil can be determined as follows.

A sample of the copper foil is washed with nitric acid (1+1) for 10 seconds to remove an oxide film on the surface of the sample. The sample is repeatedly washed until the mass of the sample decreases by at least 10%. Next, the sample is washed with distilled water, an alcohol, and acetone in this order. Then, the sample is dried with warm air and immediately subjected to analysis using an inert gas fusion-infrared absorption method to determine the oxygen content in the sample. An oxygen-nitrogen simultaneous analyzer (TC-336 manufactured by LECO Corporation) can be used as the analyzer.

(Separator)

A porous substrate that has ion permeability and electrically insulating properties is used as the separator. The separator may be constituted by a substrate or include a plurality of substrates. It is sufficient that each substrate has a sheet shape. The separator may be a stack of a plurality of substrates. Alternatively, the separator may be a stack including a substrate and protrusions (spacer). A space may be formed between an electrode and the substrate by the protrusions (spacer). The protrusions may be formed along a plurality of lines extending in a longitudinal direction of the separator, or may be formed in a honeycomb pattern, for example. The inter-electrode distance may be varied between the first region and the second region by increasing the number of substrates stacked on each other or providing protrusions in a portion of the separator.

Examples of the substrate include a microporous film, a woven fabric, a nonwoven fabric, and a heat-resistant layer, etc. The microporous film is made of a resin material such as an olefin resin, a polyamide resin, a polyimide resin, a polyester resin, or a cellulose resin, etc. Examples of the olefin resin include polyethylene, polypropylene, and an ethylene-propylene copolymer, etc. Examples of the polyester resin include polyethylene terephthalate. Examples of a fiber material of the nonwoven fabric include glass fiber, cellulose fiber, an olefin resin, a polyamide resin, a polyimide resin, and a polyester resin, etc. The heat-resistant layer is a layer made of a mixture of an inorganic material and a resin material, for example.

The thickness of the separator is not particularly limited, and is 10 $\mu$m or more and 80 $\mu$m or less, for example, and may be 20 $\mu$m or more and 70 $\mu$m or less. When the separator is a stack of a plurality of substrates, the thickness of the separator is a total thickness of the stack.

The separator may include at least one substrate selected from the group consisting of a microporous sheet (sheet-shaped microporous film) and a nonwoven sheet. Alternatively, the separator may include a microporous sheet and a heat-resistant layer provided on at least one surface of the microporous sheet. The heat-resistant layer may be disposed between the microporous sheet and at least one of the positive electrode and the negative electrode in the electrode group. The heat-resistant layer may be provided along lines on the at least one surface of the microporous sheet. A space may be provided between the microporous sheet and at least one of the positive electrode and the negative electrode by the heat-resistant layer provided along lines.

The heat-resistant layer contains inorganic particles and a resin material supporting the inorganic particles, for example. Examples of the resin material include a fluorine-containing resin such as polyvinylidene fluoride (PVdF) and polytetrafluoroethylene and fluorine-containing rubber such as a vinylidene fluoride-tetrafluoroethylene copolymer. Examples of the inorganic particles include particles of a metal oxide having insulating properties. Examples of the metal oxide include aluminum oxide (alumina or boehmite), magnesium oxide, titanium oxide (titania), zirconium oxide, silicon oxide (silica), magnesium hydroxide, and aluminum hydroxide, etc.

The average particle diameter of the inorganic particles is not particularly limited, but is preferably 10 $\mu$m or less, for example, and more preferably 0.1 $\mu$m or more and 2.0 $\mu$m or less. The particle diameter of an inorganic particle is determined by capturing an image of a cross section of the separator with use of an electron microscope, identifying the particle by performing image processing such as binarization, and calculating the diameter of an equivalent circle that has the same area as the particle. The average particle diameter is obtained by determining particle diameters of 100 or more particles and calculating the average of the particle diameters, for example.

The heat-resistant layer may be formed by applying a treatment liquid containing the resin material and the inorganic particles to a surface of the sheet-shaped substrate, the positive electrode, or the negative electrode, and drying the applied liquid, for example. For example, N-methyl-2-pyrrolidone (NMP) is used as a solvent or a dispersion medium of the treatment liquid. The content of inorganic particles in the heat-resistant layer (treatment liquid) is 70 parts by mass or more and 100 parts by mass or less per 100 parts by mass of the resin material, for example. In this case, the strength and heat resistance of the heat-resistant layer are likely to be secured.

The separator may include a substrate and protrusions (spacer). In this case, the spacer is disposed between the substrate and at least one of the positive electrode and the negative electrode. The protrusions may be provided in the first region. In this case, a space is formed between the substrate and at least one of the positive electrode and the negative electrode. The formed space absorbs an increase in the volume when the negative electrode expands, and mitigates stress generated in the negative electrode. Also, the non-aqueous electrolyte is stored in the space, and accordingly, dry-up is suppressed and the non-uniformity of a reaction occurring in the electrode group is suppressed. The protrusions may contain a resin material, or contain a resin material and inorganic particles, for example. The examples of the resin material and the inorganic particles listed above for the heat-resistant layer may also be used as the resin material and the inorganic particles contained in the protrusions.

It is sufficient that the space is present at least in a discharged state. The discharged state referred to here is a state after a large amount of lithium metal has dissolved from the negative electrode, and may be a state where the SOC is 0.1$\times$C or less, for example. However, the space need not be completely filled with lithium metal in a charged state, and may be present in the fully-charged state, for example.

The spacer is disposed on at least one selected from the group consisting of a surface of the positive electrode, a surface of the negative electrode, and a surface of a substrate included in the separator. It is preferable that the spacer is disposed on a surface of the positive electrode or the positive-electrode-side surface of the substrate. In this case, a surface pressure is likely to be applied from the substrate to the negative electrode, dendritic deposition of lithium metal is suppressed, and this is advantageous in increasing the capacity retention rate in charge-discharge cycles. The height of the spacer may be designed as appropriate according to the thickness of the substrate and the inter-electrode distance.

The following further describes an embodiment of a battery according to the present disclosure with reference to the drawings. In the drawings, the shape and features of each component do not necessarily reflect actual dimensions, and are not necessarily shown in the same scale. The same components shown in the drawings are denoted by the same reference signs.

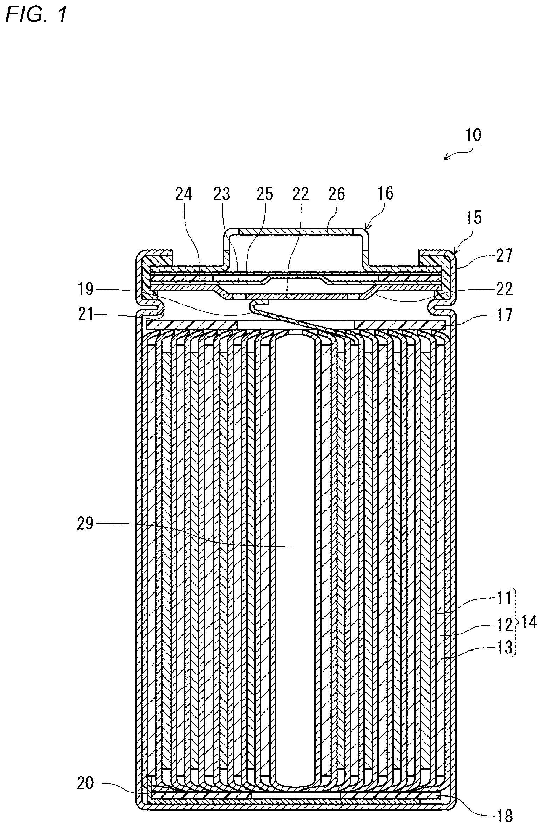

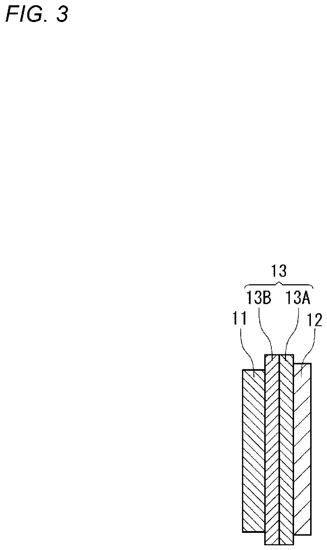

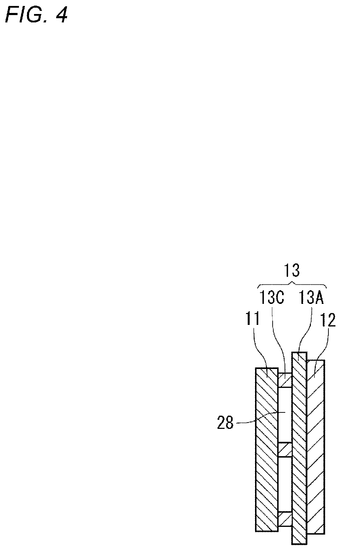

FIG. 1 is a schematic longitudinal cross-sectional view of a lithium secondary battery according to an embodiment of the present disclosure taken along a plane parallel to a winding axis. FIG. 2 is a schematic diagram showing a cross section perpendicular to an axis of the battery (cross section perpendicular to the winding axis of an electrode group). FIG. 3 is a schematic diagram showing an example of a configuration of a first region of the electrode group. FIG. 4 is a schematic diagram showing another example of the configuration of the first region of the electrode group.

A battery 10 includes a cylindrical battery case, a wound electrode group 14 housed in the battery case, and a non-aqueous electrolyte (not shown). The battery case includes a cylindrical battery can 15 having a bottom and a sealing body 16 that seals an opening of the battery can 15. The battery can 15 includes an annular step portion 21 formed by partially pressing the sidewall of the battery can from the outside in the vicinity of the opening. The sealing body 16 is supported on the opening-side surface of the step portion 21. A gasket 27 is placed between the battery can 15 and the sealing body 16 to secure the hermeticity of the battery can. Inside the battery can 15, electrically insulating plates 17 and 18 are placed respectively at two ends of the electrode group 14 in the winding axis direction.

An inner diameter of the battery can may be set such that the outer circumferential surface of the electrode group of the lithium secondary battery in the discharged state after initial charging and discharging and the inner circumferential surface of the battery can come into contact with each other . In this case, an appropriate pressure is constantly applied from the battery can to the electrode group from the outer circumferential surface side from when the battery is charged to when the battery is discharged, and accordingly, buckling of the electrodes is suppressed.

The sealing body 16 includes a filter 22, a lower valve body 23, an electrically insulating member 24, an upper valve body 25, and a cap 26. The cap 26 is disposed outside the battery can 15, and the filter 22 is disposed inside the battery can 15. Center portions of the lower valve body 23 and the upper valve body 25 are connected to each other, and the insulating member 24 is disposed between peripheral portions of the lower valve body 23 and the upper valve body 25. Peripheral portions of the filter 22 and the lower valve body 23 are connected to each other. Peripheral portions of the upper valve body 25 and the cap 26 are connected to each other. The lower valve body 23 is provided with an air vent hole. When the internal pressure of the battery can rises due to abnormal heat generation or other events, the upper valve body 25 bulges toward the cap 26 away from the lower valve body 23. Consequently, electrical connection between the lower valve body 23 and the upper valve body 25 is cut off. When the internal pressure further rises, the upper valve body 25 ruptures to let gas escape through an opening provided in the cap 26.

The electrode group 14 includes a positive electrode 11, a negative electrode (negative electrode current collector) 12, and a separator 13. The positive electrode 11, the negative electrode 12, and the separator 13 disposed therebetween all have elongated sheet shapes (or bandlike shapes) and are wound together such that the width direction of each of them is parallel to the winding axis. The electrode group 14 has a hollow part 29. As shown in FIG. 2, the electrode group 14 includes a first region 41 and a second region 42, and the inter-electrode distance X1 in the first region 41 and the inter-electrode distance X2 in the second region 42 have a relationship: $2 \leq X1/X2$.

The positive electrode 11 includes a positive electrode current collector and a positive electrode mixture layer. The positive electrode 11 is electrically connected, via a positive electrode lead 19, to the cap 26 that serves as a positive electrode terminal. One end of the positive electrode lead 19 is connected to a position near the center of the positive electrode 11 in the longitudinal direction, for example. The other end of the positive electrode lead 19 led out from the positive electrode 11 is passed through a through hole provided in the insulating plate 17 and welded to an inner surface of the filter 22.

The negative electrode 12 is electrically connected, via a negative electrode lead 20, to the battery can 15 that serves as a negative electrode terminal. One end of the negative electrode lead 20 is connected to an end portion of the negative electrode 12 in the longitudinal direction, for example, and the other end of the negative electrode lead 20 is welded to an inner bottom surface of the battery can 15.

The separator 13 is constituted by a first substrate 13A and a second substrate 13B in the first region 41 (FIG. 3), and is constituted by the first substrate 13A in the second region 42. In this case, the separator 13 is constituted by the first substrate 13A and the second substrate 13B, and/or the first substrate 13A in the third region 43, for example. Materials of the first substrate and the second substrate may be the same as each other or different from each other. Thicknesses of the first substrate and the second substrate may be the same as each other or different from each other.

Alternatively, the separator 13 may be constituted by the first substrate 13A and line-shaped protrusions 13C in the first region 41 (FIG. 4), and constituted by the first substrate 13A in the second region 42. In this case, the separator 13 is constituted by the first substrate 13A and the line-shaped protrusions 13C, and/or the first substrate 13A in the third region 43. In this case, the first substrate 13A may be a microporous sheet, and the protrusions 13C may be a heat-resistant layer. The protrusions 13C serve as a spacer, and a space 28 is formed between the positive electrode 11 and the negative electrode 12 by the protrusions 13C.

The protrusions 13C have a rectangular cross-sectional shape, but the cross-sectional shape of the protrusions 13C is not limited to this shape, and may also be a trapezoidal shape, for example. The protrusions 13C are provided between the positive electrode 11 and the first substrate 13A, but may also be provided between the negative electrode 12 and the first substrate 13A.

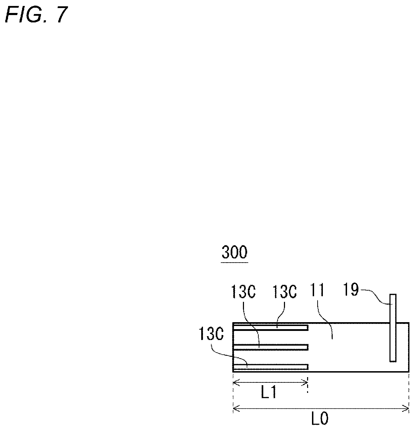

As shown in FIG. 7, the line-shaped protrusions 13C may be provided on the positive electrode 11. When the positive electrode 11 including the line-shaped protrusions 13C is viewed in a normal direction with respect to a main surface of the positive electrode 11 before the electrode group is formed, the plurality of protrusions 13C are provided at equal intervals in the width direction of the positive electrode 11. Also, the plurality of protrusions 13C extend in parallel to the length direction of the positive electrode 11.

In FIG. 7, three line-shaped protrusions 13C are provided in parallel to each other along the length direction of the positive electrode 11, but the number of line-shaped protrusions is not limited to this example. Also, the arrangement of the line-shaped protrusions is not limited to this example. When the positive electrode including protrusions is viewed in the normal direction with respect to a main surface of the positive electrode before the electrode group is formed, the protrusions may be provided so as to extend along curved lines, or formed in a network pattern or a dot pattern.

The space 28 is formed between the positive electrode 11 and the negative electrode 12 by the separator 13 including the protrusions 13C. In the discharged state, lithium metal is not deposited on the surface of the negative electrode current collector, and the space 28 is secured. On the other hand, in the charged state, lithium metal is deposited on the surface of the negative electrode current collector, and stored in the space 28 with a pressing force applied from the first substrate 13A to the lithium metal. In this example, the negative electrode 12 includes the negative electrode current collector in the discharged state, and includes the negative electrode current collector and lithium metal deposited on the surface of the negative electrode current collector in the charged state. However, this configuration is merely an example, and the negative electrode 12 may include not only the negative electrode current collector but also lithium metal on the surface of the negative electrode current collector in the discharged state as well.

Since the lithium metal is stored in the space 28 between the positive electrode 11 and the separator 13, apparent changes in the volume of the electrode group associated with the deposition of lithium metal during charge-discharge cycles are reduced. Accordingly, stress applied to the negative electrode current collector is also suppressed. Moreover, since a pressure is applied from the first substrate 13A to lithium metal stored between the negative electrode 12 and the first substrate 13A, the lithium metal is deposited in a controlled manner and is unlikely to be isolated, and a reduction in a charge-discharge efficiency can be suppressed.

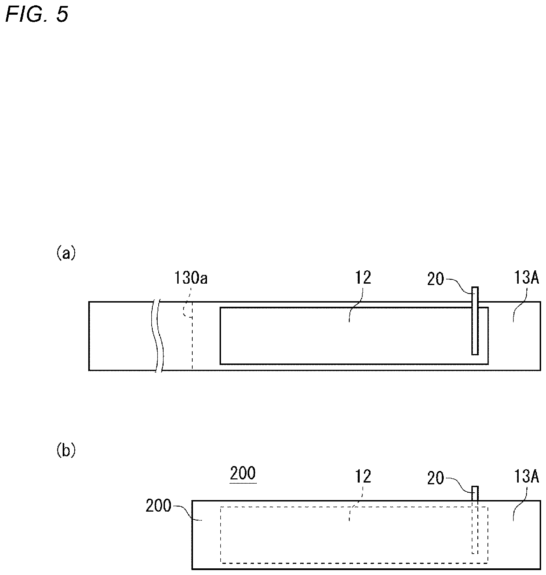

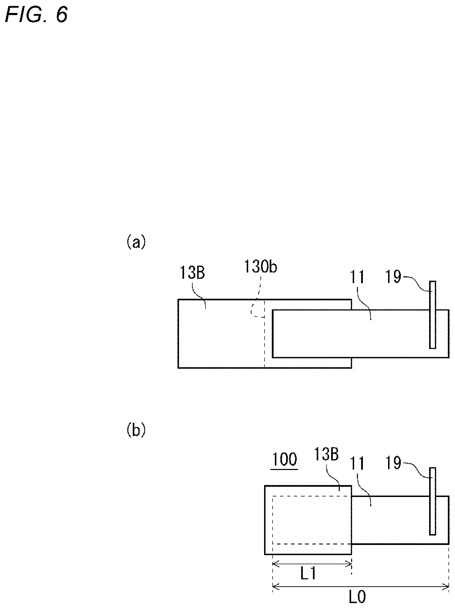

The following describes an example of a method for manufacturing an electrode group including the separator 13 that is constituted by the first substrate 13A and the second substrate 13B in the first region 41 and constituted by the first substrate in the second region 42 with reference to FIGS. 5 and 6.

The band-shaped first substrate 13A is folded in half along the width direction in a center portion in the length direction to make a fold 130a. The negative electrode 12 provided with the negative electrode lead 19 is prepared. The negative electrode 12 is placed at a predetermined position on the first substrate 13A (FIG. 5(a)). At this time, an end portion of the negative electrode 12 is fixed to the first substrate 13A with a double-sided tape or the like, for example. The first substrate 13A is folded in half along the fold 130a to obtain a negative electrode composite body 200 in which the first substrate 13A is disposed on both surfaces of the negative electrode 12 (FIG. 5(b)).

The band-shaped second substrate 13B is folded in half along the width direction in a center portion in the length direction to make a fold 130b. The positive electrode 13 provided with the positive electrode lead 20 is prepared. A portion of the positive electrode 11 is placed at a predetermined position on the second substrate 13B (FIG. 6(a)). At this time, an end portion of the positive electrode 11 is fixed to the second substrate 13B with a double-sided tape or the like, for example. The second substrate 13B is folded in half along the fold 130b to dispose the second substrate 13B on both surfaces of the positive electrode 11 on one side in the length direction of the positive electrode 11 (from which the positive electrode is wound). Thus, a positive electrode composite body 100 is obtained (FIG. 6(b)).

In the positive electrode composite body 100 shown in FIG. 6(b), a ratio: L1/L0 of a length L1 of a portion of the positive electrode 11 covered by the second substrate 13B to a length L0 of the positive electrode 11 is adjusted to a predetermined value. L1/L0 is 0.3 to 0.75, for example. L1/L0 is adjusted such that the separator is constituted by the first substrate and the second substrate in the first region, constituted by the first substrate in the second region, and constituted by the first substrate and the second substrate, and/or the first substrate in the third region when the electrode group is formed.

An end portion 200a of the negative electrode composite body 200 is wound around a winding core, and then the positive electrode composite body 100 is wound together with the negative electrode composite body 200 from the side on which the second substrate 13B is disposed. At this time, the end portion of the negative electrode composite body 200 is held in contact with the winding core, and the positive electrode composite body 100 is wound around the winding core together with the negative electrode composite body 200 from the outer surface side of the negative electrode composite body 200.

Thereafter, the winding core is removed to obtain an electrode group. The separator 13 included in the electrode group 14 is constituted by the first substrate 13A and the second substrate 13B in the first region 41 and is constituted by the first substrate 13A in the second region 42. Also, the separator 13 is constituted by the first substrate 13A and the second substrate 13B, and/or the first substrate 13A in the third region 43.

The following describes an example of a method for manufacturing an electrode group including the separator 13 that is constituted by the first substrate 13A and the line-shaped protrusions 13C in the first region 41 and is constituted by the first substrate in the second region 42 with reference to FIG. 7.

The protrusions 13C are provided on both surfaces of the positive electrode 11 on one side (from which the positive electrode is wound) in the length direction of the positive electrode 11 to obtain a positive electrode composite body 300 (FIG. 7). At this time, a ratio: L1/L0 of a length L1 of the line-shaped protrusions 13C to the length L0 of the positive electrode 11 in the positive electrode composite body 300 shown in FIG. 7 is adjusted to a predetermined value. L1/L0 is 0.3 to 0.75, for example. L1/L0 is adjusted such that the separator is constituted by the first substrate and the line-shaped protrusions in the first region, constituted by the first substrate in the second region, and constituted by the first substrate and the line-shaped protrusions, and/or the first substrate in the third region 43 when the electrode group is formed.

The end portion 200a of the negative electrode composite body 200 is wound around a winding core, and then the positive electrode composite body 300 is wound together with the negative electrode composite body 200 from the side on which the line-shaped protrusions 13C are provided. At this time, the end portion of the negative electrode composite body 200 is held in contact with the winding core, and the positive electrode composite body 300 is wound around the winding core together with the negative electrode composite body 200 from the outer surface side of the negative electrode composite body 200.

Thereafter, the winding core is removed to obtain an electrode group 14. The separator 13 included in the electrode group 14 is constituted by the first substrate 13A and the line-shaped protrusions 13C in the first region 41 and is constituted by the first substrate 13A in the second region 42. Also, the separator 13 is constituted by the first substrate 13A and the line-shaped protrusions 13C, and/or the first substrate 13A in the third region 43.

It is preferable that a thickness T of lithium metal deposited on the negative electrode when the battery is charged and an average $X_A$ of the inter-electrode distances in the electrode group when the battery is discharged satisfy a relationship: $1.5 \leq X_A/T$. Note that the average $X_A$ of the inter-electrode distances is calculated using the following formula from the inter-electrode distance X1 in the first region, the inter-electrode distance X2 in the second region, and the length L0 and the length L1 shown in FIG. 6(b) or FIG. 7.

$$\text{Average } X_A \text{ of inter-electrode distances} = X1 \times (L1/L0) + X2 \times \{(L0-L1)/L0\}$$

The average $X_A$ of the inter-electrode distances can also be said to be an average thickness of the separator between the positive electrode and the negative electrode when the battery is discharged. When the battery is discharged, the inter-electrode distance X1 in the first region 41 is substantially the same as the sum of a thickness T1 of the first substrate 13A and a thickness T2 of the second substrate 13B (or the line-shaped protrusions 13C). Also, the inter-electrode distance X2 in the second region 42 is substantially the same as the thickness T1 of the first substrate 13A.

The expression "when the battery is charged" as used here refers to a state where a large amount of lithium metal has been deposited on the negative electrode, such as a state where the SOC is $0.9 \times C$ or more, for example. The expression "when the battery is discharged" refers to a state where a large amount of lithium metal has dissolved from the negative electrode, such as a state where the SOC is $0.1 \times C$ or less, for example. If lithium metal is present when the battery is discharged as well, the above-described thickness T can also be said to be a difference between a thickness of lithium metal when the battery is charged and a thickness of lithium metal when the battery is discharged.

When $X_A/T$ is 1.5 or more, a sufficient inter-electrode distance is secured, and stress generated in the electrodes due to deposition of lithium metal (in particular, dendrites of lithium metal) during charging is likely to be mitigated. When $X_A/T$ is 1.5 or more, it is possible to achieve a remarkable effect of mitigating the concentration of stress in the vicinity of the hollow part of the electrode group by setting X1/X2 to 2 or more when the austenitic stainless steel foil or the oxygen-free copper foil is used as the negative electrode current collector. From the standpoint of improving the cycle characteristics and securing a high energy density, $X_A/T$ may be 1.5 or more and 4 or less, for example.

In the illustrated example, the lithium secondary battery including the wound electrode group has a cylindrical shape, but the shape and the like of the lithium secondary battery are not limited to those in this example, and the lithium secondary battery may have a rectangular shape or a shape appropriately selected from various shapes in accordance with the application or the like. Also, known configurations other than those described above can be applied without particular limitation.

The following describes the negative electrode, the positive electrode, and the non-aqueous electrolyte of the lithium secondary battery in detail.

(Negative Electrode)

The negative electrode includes a negative electrode current collector. In the lithium secondary battery, lithium metal is deposited on the surface of the negative electrode when the battery is charged. More specifically, lithium ions contained in the non-aqueous electrolyte receive electrons on the negative electrode during charging and become lithium metal, which is deposited on the surface of the negative electrode. The lithium metal deposited on the surface of the negative electrode dissolves as lithium ions in the non-aqueous electrolyte during discharging. Note that the lithium ions contained in the non-aqueous electrolyte may either be derived from a lithium salt added to the non-aqueous electrolyte or supplied from a positive electrode active material during charging, or both.

The negative electrode may also include the negative electrode current collector and sheet-shaped lithium metal or a lithium alloy, which is in intimate contact with a surface of the negative electrode current collector. That is to say, a base layer (layer made of lithium metal or a lithium alloy (hereinafter also referred to as a "lithium base layer")) containing lithium metal may also be provided on the negative electrode current collector in advance. The lithium alloy may contain elements such as aluminum, magnesium, indium, zinc, silver, and copper in addition to lithium. It is possible to suppress dendritic deposition of lithium metal more effectively by providing the lithium base layer and causing lithium metal to be deposited on the lithium base layer during charging. The thickness of the lithium base layer is not particularly limited, and may be within a range from 5 $\mu$m to 25 $\mu$m, for example.

The negative electrode may also include a lithium ion absorbing layer (layer that realizes a capacity through absorption and release of lithium ions by a negative electrode active material (e.g., graphite)) supported on the negative electrode current collector. In this case, the open circuit potential of the negative electrode in the fully-charged state may be 70 mV or less with respect to lithium metal (lithium dissolution/deposition potential). When the open circuit potential of the negative electrode in the fully-charged state is 70 mV or less with respect to lithium metal, lithium metal is present on a surface of the lithium ion absorbing layer in the fully-charged state. That is to say, the negative electrode realizes a capacity through deposition and dissolution of lithium metal.

The lithium ion absorbing layer is a layer formed of a negative electrode mixture containing the negative electrode active material. The negative electrode mixture may also contain a binder, a thickener, an electrically conductive agent, etc., in addition to the negative electrode active material.

Examples of the negative electrode active material include a carbonaceous material, a Si-containing material, and a Sn-containing material. The negative electrode may contain one negative electrode active material or two or more negative electrode active materials in combination. Examples of the carbonaceous material include graphite, easily-graphitizable carbon (soft carbon), and hardly-graphitizable carbon (hard carbon).

Examples of the electrically conductive material include a carbon material. Examples of the carbon material include carbon black, acetylene black, Ketjen Black, carbon nanotubes, and graphite, etc.

Examples of the binder include a fluorocarbon resin, polyacrylonitrile, a polyimide resin, an acrylic resin, a polyolefin resin, and a rubbery polymer, etc. Examples of the fluorocarbon resin include polytetrafluoroethylene and polyvinylidene fluoride, etc.

(Positive Electrode)

The positive electrode includes a positive electrode current collector and a positive electrode mixture layer supported by the positive electrode current collector, for example. The positive electrode mixture layer contains a positive electrode active material, an electrically conductive material, and a binder, for example. The positive electrode mixture layer may be formed on a surface or both surfaces of the positive electrode current collector. The positive electrode is obtained by applying a positive electrode mixture slurry containing the positive electrode active material, the electrically conductive material, and the binder to both surfaces of the positive electrode current collector, drying the applied films, and then rolling the dry applied films, for example. Known materials may be used as the positive electrode active material, the binder, the electrically conductive material, and the like.

The positive electrode active material absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred in terms of its low production cost and high average discharge voltage.

The lithium-containing transition metal oxide is a composite oxide containing lithium and a metal Me other than lithium, and the metal Me includes at least a transition metal. Among lithium-containing transition metal oxides, a composite oxide that has a crystal structure like that of rock-salt (layered rock-salt) having a layered structure is preferred in view of achieving a high capacity.

The metal Me may include Sc, Ti, V, Cr, Mn, Fe, Co, Ni, Cu, Y, Zr, W, etc., as a transition metal element. The lithium-containing transition metal oxide may contain one transition metal element or two or more transition metal elements. It is desirable that the metal Me includes at least one selected from the group consisting of Co, Ni, and Mn as the transition metal element, and it is desirable that the metal Me includes at least Ni as the transition metal element.

The lithium-containing transition metal oxide may contain one or more typical elements as necessary. Examples of the typical elements include Mg, Al, Ca, Zn, Ga, Ge, Sn, Sb, Pb, and Bi, etc. The typical element may be Al, for example. That is to say, the metal Me may include Al as an optional component.

The lithium-containing transition metal oxide is represented by a general formula (1): $Li_aNi_bM_{1-b}O_2$, for example. In the general formula (1), a and b satisfy $0.9 \leq a \leq 1.2$ and $0.65 \leq b \leq 1$, and M is at least one element selected from the group consisting of Co, Mn, Al, Ti, Fe, Nb, B, Mg, Ca, Sr, Zr, and W.

A molar ratio: mLi/mMe of a total amount mLi of Li contained in the positive electrode and the negative electrode to an amount mMe of the metal Me contained in the lithium-containing transition metal oxide is 1.2 or less, for example, and may be 1.1 or less.

Examples of the material of the positive electrode current collector include a metal material containing Al, Ti, Fe, etc., for example. The metal material may be Al, an Al alloy, Ti, a Ti alloy, or a Fe alloy (e.g., stainless steel (SUS)).

The thickness of the positive electrode current collector is not particularly limited, and is 5 $\mu$m or more and 300 $\mu$m or less, for example.

(Non-Aqueous Electrolyte)

The non-aqueous electrolyte having lithium ion conductivity contains a non-aqueous solvent, and lithium ions and anions dissolved in the non-aqueous solvent, for example. The non-aqueous electrolyte may be a liquid or a gel. A liquid non-aqueous electrolyte is prepared by dissolving a lithium salt in a non-aqueous solvent. When the lithium salt dissolves in the non-aqueous solvent, lithium ions and anions are produced.

The lithium salt or anions may be any known lithium salt or anions that are used for non-aqueous electrolytes of lithium secondary batteries. Specific examples thereof include $BF_4^-$, $ClO_4^-$, $PF_6^-$, $CF_3SO_3^-$, $CF_3CO_2^-$, imide anions, and oxalate complex anions, etc. Examples of the imide anions include $N(SO_2CF_3)_2^-$ and $N(C_mF_{2m+1}SO_2)_x(C_nF_{2n+1}SO_2)_y^-$ (m and n are independently 0 or an integer of 1 or more, x and y are independently 0, 1, or 2, and satisfy x+y=2), etc. The oxalate complex anions may contain boron and/or phosphorus. The non-aqueous electrolyte may contain one of these anions, or two or more of them.

From the standpoint of suppressing dendritic deposition of lithium metal, the non-aqueous electrolyte preferably contains at least oxalate complex anions, in particular, oxalate complex anions containing fluorine. The oxalate complex anions containing fluorine interact with lithium to make lithium metal more likely to be deposited uniformly in a fine particulate state. Therefore, localized deposition of lithium metal is likely to be suppressed. The oxalate complex anions containing fluorine may be used in combination with other anions. The other anions may be $PF_6^-$ and/or imide anions. Examples of the oxalate complex anions include bis(oxalato)borate anions, difluoro(oxalato)borate anions ($BF_2(C_2O_4)^-$), $PF_4(C_2O_4)^-$, and $PF_2(C_2O_4)_2^-$, etc., and it is desirable to use at least difluoro(oxalato)borate anions.

Examples of the non-aqueous solvent include an ester, an ether, a nitrile, an amide, and halogen substituted derivatives of these. The non-aqueous electrolyte may include one of these non-aqueous solvents, or two or more of them. Examples of the halogen substituted derivatives include fluorides.

Examples of the ester include carbonic esters and carboxylic acid esters. Examples of cyclic carbonic esters include ethylene carbonate, propylene carbonate, and fluoroethylene carbonate (FEC). Examples of chain carbonic esters include dimethyl carbonate (DMC), ethyl methyl carbonate (EMC), and diethyl carbonate. Examples of cyclic carboxylic acid esters include $\gamma$-butyrolactone and $\gamma$-valerolactone. Examples of chain carboxylic acid esters include ethyl acetate, methyl propionate, and methyl fluoropropionate.

Examples of the ether include cyclic ethers and chain ethers. Examples of the cyclic ethers include 1,3-dioxolane, 4-methyl-1,3-dioxolane, tetrahydrofuran, and 2-methyltetrahydrofuran. Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The lithium salt concentration in the non-aqueous electrolyte is 0.5 mol/L or more and 3.5 mol/L or less, for example. The anion concentration in the non-aqueous electrolyte may be set to 0.5 mol/L or more and 3.5 mol/L or less. The oxalate complex anion concentration in the non-aqueous electrolyte may be set to 0.05 mol/L or more and 1 mol/L or less.

[Examples]

The following describes the lithium secondary battery according to the present disclosure in more detail based on Examples and Comparative Examples. However, the present disclosure is not limited to the following Examples.

<<Examples 1 to 6>>

(Preparation of negative electrode)

Aband-shaped negative electrode current collector (thickness: 10 $\mu$m) was prepared. A lithium metal foil (thickness: 30 $\mu$m) was pressure-bonded to each surface of the negative electrode current collector in a dry atmosphere in which the dew point was -30°C or lower to provide a lithium metal layer (base layer) on each surface of the negative electrode current collector. Thus, a negative electrode 12 was produced. A negative electrode lead 20 made of Ni was attached to a predetermined position on the negative electrode 12. Note that the lithium metal layer had a thickness of 55 $\mu$m when the battery was charged and a thickness of 30 $\mu$m when the battery was discharged. That is to say, the thickness T of lithium metal deposited on the negative electrode during charging was 25 $\mu$m.

An austenitic stainless steel foil or an oxygen-free copper foil was used as the negative electrode current collector. A foil made of SUS316L or SUS304 was used as the austenitic stainless steel foil. A foil made of an alloy No. C1020 specified in JIS H 3100 was used as the oxygen-free copper foil.

(Preparation of first substrate)

The band-shaped first substrate 13A shown in FIG. 5(a) was prepared. A sheet-shaped microporous polyethylene film was used as the first substrate 13A. The first substrate 13A had a thickness of 15 $\mu$m.

(Production of negative electrode composite body)

The negative electrode 12 was placed at a predetermined position on the first substrate 13A(FIG. 5(a)). At this time, an end portion (a portion that did not face the positive electrode) of the negative electrode 12 was fixed to the first substrate 13A with a double-sided tape. Next, the first substrate 13A was folded in half along the fold 130a to obtain a negative electrode composite body 200 in which the first substrate 13A was disposed on both surfaces of the negative electrode 12 (FIG. 5(b)).

(Production of positive electrode)

2.5 parts by mass of acetylene black and 2.5 parts by mass of polyvinylidene fluoride were added to 95 parts by mass of a positive electrode active material, and an appropriate amount of N-methyl-2-pyrrolidone was further added to the mixture and the mixture was stirred to prepare a positive electrode mixture slurry. A lithium-containing transition metal oxide containing Li, Ni, Co, and Al (a molar ratio of Li to the total amount of Ni, Co, and Al was 1.0) and having a rock salt-type layered structure was used as the positive electrode active material.

The positive electrode mixture slurry was applied to both surfaces of an Al foil (positive electrode current collector) and then dried, and the applied films were rolled to obtain a stack including a positive electrode mixture layer formed on each surface of the positive electrode current collector. The stack was cut to a predetermined electrode size to obtain a band-shaped positive electrode 11. A positive electrode lead 19 made of Al was attached to a predetermined position on the positive electrode 11. A packing amount of the positive electrode mixture layer (the positive electrode active material) was adjusted such that the thickness T of lithium metal deposited on the negative electrode current collector during charging was 25 $\mu$m.

(Preparation of second substrate)

The band-shaped second substrate 13B shown in FIG. 6(a) was prepared. The length of the second substrate 13B was adjusted such that a ratio: L1/L0 of a length L1 of a portion in which the positive electrode was covered by the second substrate 13B to a length L0 of the positive electrode 11 was a value shown in Table 1 when a positive electrode composite body 100, which will be described later, was formed. The second substrate 13B had a thickness of 20 $\mu$m, 45 $\mu$m, 75 $\mu$m, or 105 $\mu$m. A sheet-shaped microporous polyethylene film was used as the second substrate 13B.

(Production of positive electrode composite body)

A portion of the positive electrode 11 was placed at a predetermined position on the second substrate 13B (FIG. 6(a)). At this time, an end portion of the positive electrode 11 was fixed to the second substrate 13B with a double-sided tape. Next, the second substrate 13B was folded in half along the fold 130b to dispose the second substrate 13B on both surfaces of the positive electrode 11 on one side in the length direction of the positive electrode 11 (from which the positive electrode was wound), and thus the positive electrode composite body 100 was obtained (FIG. 6(b)). In the positive electrode composite body 100 shown in FIG. 6(b), the ratio: L1/L0 of the length L1 of the portion in which the positive electrode 11 was covered by the second substrate 13B to the length L0 of the positive electrode 11 was adjusted to the value shown in Table 1.

(Production of electrode group)

An end portion 200a of the negative electrode composite body 200 was wound around a winding core, and then the positive electrode composite body 100 was wound together with the negative electrode composite body 200 from the side on which the second substrate 13B was disposed. At this time, the end portion of the negative electrode composite body 200 was held in contact with the winding core, and the positive electrode composite body 100 was wound around the winding core together with the negative electrode composite body 200 from the outer surface side of the negative electrode composite body 200.

Thereafter, the winding core was removed to obtain an electrode group 14. The electrode group 14 included a separator 13 that was constituted by the first substrate 13A and the second substrate 13B in the first region and constituted by the first substrate 13A in the second region. The positive electrode lead 19 and the negative electrode lead 20 were exposed from one edge surface of the electrode group.

(Preparation of non-aqueous electrolyte)

LiFSI and LiFOB were dissolved in a mixed solvent containing dimethoxyethane (DME) and 1,1,2,2-tetrafluoroethyl-2,2,3,3-tetrafluoropropyl ether $(H(CF_2)_2CH_2O(CF_2)_2H)$ at a mass ratio of 25:75 to prepare a non-aqueous electrolyte. The LiFSI concentration in the non-aqueous electrolyte was 1.0 mol/L, and the LiFOB concentration in the non-aqueous electrolyte was 0.05 mol/L. Note that LiFSI is $LiN(SO_2F)_2$ and LiFOB is $LiBF_2(C_2O_4)$.

(Assembly of battery)

The electrode group was inserted into a cylindrical battery can having a bottom, the non-aqueous electrolyte was poured into the battery can, and the opening of the battery can was sealed with a sealing body. At this time, the positive electrode lead was connected to the sealing body, and the negative electrode lead was connected to the battery can. A gasket was disposed between the sealing body and the battery can. Thus, a lithium secondary battery was completed. Note that E1 to E6 in Table 1 represent lithium secondary batteries of Examples 1 to 6, respectively.

<<Example 7>>

(Preparation of spacer ink)

90 parts by mass of inorganic particles, 10 parts by mass of polyvinylidene fluoride (PVdF), which is a resin material, and N-methyl-2-pyrrolidone, which is a dispersion medium, were mixed to prepare a spacer ink. Alumina particles (including alumina particles having an average particle diameter of 1 μm and alumina particles having an average particle diameter of 0.1 μm at a mass ratio of 10/1) were used as the inorganic particles.

(Production of positive electrode including spacer: formation of line-shaped protrusions on positive electrode)

The spacer ink was applied to both surfaces of the positive electrode with use of a dispenser and dried with hot air to form line-shaped protrusions (spacer). Specifically, line-shaped protrusions 13C were provided on both surfaces of the positive electrode 11 on one side in the length direction of the positive electrode 11 (from which the positive electrode was wound) as shown in FIG. 7. Specifically, a total of three mutually parallel line-shaped protrusions 13C (width: 1 mm, height: 75 μm) were formed along the length direction of the positive electrode 11 in two end portions and a center portion in the width direction of the positive electrode 11. Thus, a positive electrode composite body 300 was obtained (FIG. 7). At this time, a ratio: L1/L0 of a length L1 of the line-shaped protrusions 13C to the length L0 of the positive electrode 11 in the positive electrode composite body 300 was adjusted to a value shown in Table 1.

(Production of electrode group)

The end portion 200a of the negative electrode composite body 200 was wound around a winding core, and then the positive electrode composite body 300 was wound together with the negative electrode composite body 200 from the side on which the line-shaped protrusions 13C were provided. At this time, the end portion of the negative electrode composite body 200 was held in contact with the winding core, and the positive electrode composite body 300 was wound around the winding core together with the negative electrode composite body 200 on the outer surface side of the negative electrode composite body 200.

Thereafter, the winding core was removed to obtain an electrode group 14. The electrode group 14 included a separator 13 that was constituted by the first substrate 13A and the line-shaped protrusions 13C in the first region 41 and constituted by the first substrate 13A in the second region 42.

A battery E7 was obtained in the same manner as the battery E5 of Example 5 except that the electrode group obtained as described above was used.

<<Comparative Example 1>>

The packing amount of the positive electrode mixture layer (the positive electrode active material) was adjusted such that the thickness T of lithium metal deposited on the negative electrode current collector during charging was 20 $\mu$m. A positive and negative electrode stack was formed by placing the positive electrode at a predetermined position on the negative electrode composite body, without the second substrate being used, and the positive and negative electrode stack was wound using a winding core to obtain an electrode group.

A battery R1 was obtained in the same manner as the battery E5 of Example 5 except the above changes.

<<Comparative Example 2>>

A battery R2 was obtained in the same manner as the battery R1 of Comparative Example 1 except that a foil made of SUS444 (ferritic stainless steel) was used as the negative electrode current collector.

<<Comparative Example 3>>

An electrodeposited copper foil was used as the negative electrode current collector. A second substrate 13B having a thickness of 15 $\mu$m was used. The packing amount of the positive electrode mixture (the positive electrode active material) was adjusted such that the thickness T of lithium metal deposited on the negative electrode current collector during charging was 20 $\mu$m.

A battery R3 was obtained in the same manner as the battery E5 of Example 5 except the above changes.

<<Comparative Example 4>>

An electrodeposited copper foil was used as the negative electrode current collector. Line-shaped protrusions 13C having a thickness of 15 $\mu$m were formed. The packing amount of the positive electrode mixture layer (the positive electrode active material) was adjusted such that the thickness T of lithium metal deposited on the negative electrode current collector during charging was 10 $\mu$m.

A battery R4 was obtained in the same manner as the battery E7 of Example 7 except the above changes.

[Evaluation]

A charge-discharge cycle test was performed on each of the obtained batteries in an environment at a temperature of 25°C. The batteries were charged and discharged under the following conditions. A pause of 20 minutes was taken between charging and discharging.

(Charging)

Constant-current charging was performed at 10 mA until the battery voltage reached 4.1 V, and then constant-voltage charging was performed at the voltage of 4.1 V until the current value reached 1 mA.

(Discharging)

Constant-current discharging was performed at 10 mA until the battery voltage reached 3.0 V

The charging and discharging were repeatedly performed until 100 cycles, and a rate: $(C2/C1) \times 100$ of a discharge capacity $C2$ at the 100th cycle to a discharge capacity $C1$ at the 1st cycle was determined as a cycle capacity retention rate (%).

Evaluation results are shown in Table 1. The cycle capacity retention rates shown in Table 1 are relative values (indexes) when the cycle capacity retention rate of the battery R2 of Comparative Example 2 is taken to be 100.

[Table 1]

| Lithium secondary battery | First region | | Second region | | Ratio between inter-electrode distances X1/X2 | Length ratio L/L0 (FIG. 6(b) or FIG. 7) | Average inter-electrode distance $X_A$ ($\mu$m) | Thickness T of Li deposited on negative electrode during charging ($\mu$m) | $X_A$/T | Material of negative electrode current collector | Cycle capacity retention rate (index) |
|---|---|---|---|---|---|---|---|---|---|---|---|
| | Inter-electrode distance X1 ($\mu$m) | Separator configuration | Inter-electrode distance X2 ($\mu$m) | Separator configuration | | | | | | | |
| E1 | 35 | First substrate+second substrate | 15 | First substrate | 2.3 | 0.75 | 30 | 25 | 1.2 | SUS304 | 108.7 |
| E2 | 35 | First substratet+second substrate | 15 | First substrate | 2.3 | 0.75 | 30 | 25 | 1.2 | SUS316L | 114.1 |
| E3 | 60 | First substrate+second substrate | 15 | First substrate | 4 | 0.5 | 37.5 | 25 | 1.5 | SUS316L | 116.3 |
| E4 | 60 | First substrate+second substrate | 15 | First substrate | 4 | 0.5 | 37.5 | 25 | 1.5 | Oxygen-free copper | 115.0 |
| E5 | 90 | First substrate+second substrate | 15 | First substrate | 6 | 0.3 | 37.5 | 25 | 1.5 | SUS316L | 125.0 |
| E6 | 120 | First substrate+second substrate | 15 | First substrate | 8 | *0.3* | 46.5 | 25 | 1.9 | SUS316L | 127.2 |
| E7 | 90 | First substrate+protrusions | 15 | First substrate | 6 | 0.3 | 37.5 | 25 | 1.5 | SUS316L | 126.1 |
| R1 | 15 | First substrate | 15 | First substrate | 1 | - | (15) | 20 | (0.75) | SUS316L | 103.0 |
| R2 | 15 | First substrate | 15 | First substrate | 1 | - | (15) | 20 | (0.75) | SUS444 | 100 |
| R3 | 30 | First substrate+second substrate | 15 | First substrate | 2 | 0.3 | 19.5 | 20 | 1 | Electrodeposited copper | 87.0 |
| R4 | 30 | First substrate+protrusions | 15 | First substrate | 2 | 0.3 | 19.5 | 10 | 2 | Electrodeposited copper | 92.4 |

The batteries E1 and E7 had higher capacity retention rates than the batteries R1 to R4.

In the battery R1, the negative electrode current collector was made of austenitic stainless steel and X1/X2 was less than 2, and therefore, stress was concentrated in the vicinity of the hollow part of the electrode group along with expansion of the negative electrode, and the capacity retention rate decreased. In the battery R2, X1/X2 was less than 2, the negative electrode current collector was the ferritic stainless steel (SUS444) foil, which became brittle and broke, and the capacity retention rate decreased. In the batteries R3 and R4, the electrodeposited copper foil was used, and accordingly, the electrodeposited copper foil became brittle and broke, and the capacity retention rate decreased.

[Industrial Applicability]

The lithium secondary battery according to the present disclosure is applicable to electronic devices such as cellular phones, smart phones, and tablet terminals, electric vehicles, hybrid vehicles, plug-in hybrids, and home storage batteries.

Although currently preferred embodiments of the present invention are described, the disclosure should not be construed as limiting the present invention. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

[Reference Signs List]

10: lithium secondary battery, 11: positive electrode; 12: negative electrode, 13: separator, 13A: first substrate, 13B: second substrate, 13C: line-shaped protrusions, 14: electrode group, 15: battery can, 16: sealing body, 17, 18: insulating plate, 19: positive electrode lead, 20: negative electrode lead, 21: step portion, 22: filter, 23: lower valve body, 24: insulating member, 25: upper valve body, 26: cap, 27: gasket, 28: space, 29: hollow part, 41: first region, 42: second region, 43: third region, 100, 300: positive electrode composite body, 200: negative electrode composite body

**Claims**

1. A lithium secondary battery comprising:

    a columnar wound electrode group having a hollow part; and
    a non-aqueous electrolyte having lithium ion conductivity,
    wherein the electrode group includes a positive electrode, a negative electrode including a negative electrode current collector, and a separator disposed between the positive electrode and the negative electrode,
    lithium metal is deposited on the negative electrode when the battery is charged and the lithium metal dissolves when the battery is discharged,
    the negative electrode current collector is an austenitic stainless steel foil or an oxygen-free copper foil, and
    when D represents a length in a radial direction from an inner circumferential surface to an outer circumferential surface of the electrode group in a cross section perpendicular to a winding axis of the electrode group in a discharged state,
    the electrode group in the discharged state includes a first region that is within a distance of $(1/4) \times D$ from the inner circumferential surface of the electrode group and a second region that is within a distance of $(1/4) \times D$ from the outer circumferential surface of the electrode group, and
    in the electrode group in the discharged state, an inter-electrode distance X1 between the positive electrode and the negative electrode in the first region and an inter-electrode distance X2 between the positive electrode and the negative electrode in the second region have a relationship: $2 \leq X1/X2$.

2. The lithium secondary battery according to claim 1,
   wherein the X1/X2 is 2 or more and 8 or less.

3. The lithium secondary battery according to claim 1 or 2,
   wherein a thickness T of lithium metal deposited on the negative electrode when the battery is charged and an average $X_A$ of the inter-electrode distances in the electrode group when the battery is discharged satisfy a relationship: $1.5 \leq X_A/T$.

4. The lithium secondary battery according to any one of claims 1 to 3,

wherein the separator is constituted by a first substrate and a second substrate in the first region and constituted by the first substrate in the second region.

5. The lithium secondary battery according to any one of claims 1 to 3,

wherein the separator is constituted by a first substrate and a line-shaped protrusion in the first region and constituted by the first substrate in the second region, and
a space is provided between the first substrate and at least one of the positive electrode and the negative electrode by the line-shaped protrusion in the first region.

*FIG. 1*

FIG. 2

FIG. 3

FIG. 4

*FIG. 5*

(a)

(b)

FIG. 6

(a)

13B    130b              11    19

(b)

100   13B   11    19

L1

L0

*FIG. 7*

## INTERNATIONAL SEARCH REPORT

International application No.

**PCT/JP2023/013185**

### A. CLASSIFICATION OF SUBJECT MATTER

*H01M 10/0587*(2010.01)i; *H01M 4/134*(2010.01)i; *H01M 4/66*(2006.01)i; *H01M 10/052*(2010.01)i; *H01M 50/449*(2021.01)i; *H01M 50/46*(2021.01)i; *H01M 50/463*(2021.01)i
FI:    H01M10/0587; H01M10/052; H01M4/134; H01M4/66 A; H01M50/449; H01M50/463 B; H01M50/46

According to International Patent Classification (IPC) or to both national classification and IPC

### B. FIELDS SEARCHED

Minimum documentation searched (classification system followed by classification symbols)

H01M10/0587; H01M4/134; H01M4/66; H01M10/052; H01M50/449; H01M50/46; H01M50/463

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-212608 A (PANASONIC INTELLECTUAL PROPERTY MANAGEMENT CO., LTD.) 12 December 2019 (2019-12-12)<br>paragraphs [0029], [0030] | 1-5 |
| A | JP 10-012279 A (DENSO CORP.) 16 January 1998 (1998-01-16)<br>paragraphs [0015]-[0017] | 1-5 |
| A | KR 2003-0033491 A (SAMSUNG SDI CO., LTD.) 01 May 2003 (2003-05-01)<br>p. 2, lines 48 to p. 3, line 15 | 1-5 |
| A | JP 2019-057422 A (IBIDEN CO., LTD.) 11 April 2019 (2019-04-11)<br>paragraph [0020] | 1-5 |
| A | JP 2017-195028 A (HITACHI MAXELL LTD.) 26 October 2017 (2017-10-26)<br>paragraph [0038] | 1-5 |
| A | JP 2012-201964 A (NIPPON MINING & METALS CO., LTD.) 22 October 2012 (2012-10-22)<br>paragraphs [0010], [0011] | 1-5 |

☐ Further documents are listed in the continuation of Box C.          ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **12 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/013185**

| Patent document cited in search report | | | Publication date (day/month/year) | Patent family member(s) | | | Publication date (day/month/year) |
|---|---|---|---|---|---|---|---|
| JP | 2019-212608 | A | 12 December 2019 | US 2019/0372170 A1 paragraphs [0034], [0035] EP 3576184 A1 CN 110556565 A | | | |
| JP | 10-012279 | A | 16 January 1998 | (Family: none) | | | |
| KR | 2003-0033491 | A | 01 May 2003 | (Family: none) | | | |
| JP | 2019-057422 | A | 11 April 2019 | WO 2019/059121 A1 CN 111108634 A | | | |
| JP | 2017-195028 | A | 26 October 2017 | (Family: none) | | | |
| JP | 2012-201964 | A | 22 October 2012 | (Family: none) | | | |

Form PCT/ISA/210 (patent family annex) (January 2015)

**EP 4 503 245 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014216261 A